# FASCICULE DE BREVET EUROPEEN

(11) **EP 2 178 924 B1**
(45) Date de publication et mention de la délivrance du brevet: **13.06.2012**
(21) Numéro de dépôt: 08829045.7
(22) Date de dépôt: 17.07.2008
(51) Int. Cl.: C08C 19/04, C08C 19/20, C08C 19/22, C08C 19/24, C08F 8/06, C08F 8/32, C08F 8/34, C08L 95/00, C08L 53/02

(54) **COMPOSITION BITUME/POLYMERE A RETICULATION THERMOREVERSIBLE**
WÄRMEUMKEHRBARE VERNETZTE BITUMEN/POLYMER-ZUSAMMENSETZUNG
THERMOREVERSIBLY CROSSLINKED BITUMEN/POLYMER COMPOSITION

(30) Priorité: 24.07.2007 FR 0705367
(43) Date de publication de la demande: 28.04.2010
(73) Titulaire: Total Raffinage Marketing, 92800 Puteaux (FR); Centre National de la Recherche Scientifique - CNRS, 75794 Paris Cedex 16 (FR)
(72) Inventeur: CHAVEROT, Pierre, F-42800 Sainte-Croix en Jarez (FR); GODIVIER, Charlotte, F-69230 Saint Genis-Laval (FR); LEIBLER, Ludwik, F-75006 Paris (FR); ILIOPOULOS, Ilias, F-75012 Paris (FR); LEACH, Amanda, Kathryn, Delanson, NY 12053 (US)
(74) Mandataire: Hirsch & Associés
(86) Numéro de dépôt international: PCT/FR2008/001052
(87) Numéro de publication internationale: WO 2009/030840

(56) Documents cités:
- EP-A- 1 350 813
- WO-A-97/14754
- US-A- 5 087 652

## Description

### DOMAINE TECHNIQUE.

La présente invention appartient au domaine des bitumes/polymères. Plus spécifiquement, elle concerne des compositions bitume/polymère réticulées de manière thermoréversible.

L'invention concerne également l'utilisation de ces compositions bitume/polymère dans les domaines des applications routières, notamment dans la fabrication de liants routiers, et dans les domaines des applications industrielles. L'invention concerne aussi le procédé de préparation de ces compositions bitume/polymère réticulées de manière thermoréversible.

### CONTEXTE TECHNIQUE.

L'utilisation du bitume dans la fabrication de matériaux pour applications routières et industrielles est connue de longue date : le bitume est le principal liant hydrocarboné utilisé dans le domaine de la construction routière ou du génie civil. Pour pouvoir être utilisé comme liant dans ces différentes applications, le bitume doit présenter certaines propriétés mécaniques et notamment des propriétés élastiques ou cohésives. Le bitume seul n'étant en général pas assez élastique ou cohésif, on ajoute au bitume des polymères qui peuvent être éventuellement réticulés. Ces polymères réticulés ou non apportent aux compositions bitume/polymère des propriétés élastiques et cohésives améliorées. Généralement, la réticulation est irréversible ; une fois la réticulation effectuée, il n'est pas possible de revenir à l'état initial existant avant la réaction de réticulation. Les compositions bitume/polymère réticulées ont ainsi de bonnes propriétés mécaniques, mais la viscosité de celles-ci est très élevée. En effet les deux caractéristiques « propriétés mécaniques » d'une part et « fluidité » d'autre part sont antinomiques. Les propriétés mécaniques (élasticité et cohésion), sont favorisées par des grandes longueurs de chaîne, donc par une réticulation des chaînes polymériques. La fluidité est favorisée par une faible longueur de chaîne, donc par une absence de réticulation ou une faible réticulation des chaînes polymériques. Suivant les applications visées, il est nécessaire de trouver le bon compromis entre propriétés mécaniques et fluidité en jouant sur le taux de réticulation ou la nature de la réticulation.

### ART ANTERIEUR.

Les réticulations selon l'art antérieur sont la plupart du temps, des réticulations irréversibles basées sur la formation de liaisons covalentes entre les chaînes polymériques. Ainsi une des réticulations les plus utilisées dans le domaine des bitumes est la réticulation au soufre ou vulcanisation. Dans la réticulation au soufre, des chaînes plus ou moins courtes de soufre (en général de 2 à 8 atomes de soufre) lient de manière covalente les chaînes de polymères. En jouant sur la nature chimique du donneur de soufre et/ou du polymère, sur la température, sur la concentration du polymère et/ou des donneurs de soufre, la société demanderesse a ainsi développé et breveté un grand nombre de compositions bitume/polymère réticulées ayant des propriétés nettement améliorées par rapport au bitume sans polymère et par rapport au mélange physique bitume/polymère non réticulé. Parmi les brevets de la société demanderesse, on peut notamment citer les références suivantes : FR2376188, FR7818534, EP0799280, EP0690892.

De nouveaux polymères à réticulation thermoréversible ont été récemment développés. La plupart de ces réticulations thermoréversibles se font par l'intermédiaire de liaisons covalentes thermoréversibles. Il existe aussi des réticulations thermoréversibles qui se font via des liaisons de coordination ou des liaisons ioniques.

Ainsi, JP 11106578 décrit la modification d'une polyoléfine par un anhydride d'acide lequel réagit en présence d'alcools pour former des liaisons esters thermoréversibles.

EP 870793 décrit un mélange d'un premier polymère possédant au moins deux fonctions acide et d'un second polymère possédant au moins deux fonctions amines de façon à former des groupements amides stables à basse température et dissociables à haute température.

FR2558845 décrit la réaction entre un divinyl éther et un copolymère porteur de fonctions acides. L'acyle obtenu est stable à basse température et se décompose en élevant la température.

D'autres polymères à réticulation thermoréversible font intervenir des polymères comprenant des motifs acides carboxyliques qui se lient de manière réversible à des métaux (JP 50139135, JP 51019035, JP 56014573).

D'autres encore, font intervenir des liaisons ioniques labiles entre groupements acide et amine (JP 52065549, JP57158275).

US 5087652 décrit des mélanges de bitume comprenant 0,1 à 5 %en poids d'un polymère de chloroprène. Les polymères de chloroprène peut contenir jusqu'à 12 % en poids de 2,3-dichlorobutadiène-1,3 un monomère de vinyle ou de leurs mélanges. Les polymères de chloroprène sont des polymères chloroprène modifiés par des mercaptans ou dialkyl-ou dialcoxy xanthogène disulfure et ont une teneur en gel de 10 à 50% en poids et de préférence de 20 à 40 % en poids.

EP1350813 décrit un bitume modifié avec des polymères comprenant de 0,5% à 10% d'un copolymère à structure en peigne comportant un tronc et au moins un greffon.

### OBJECTIFS DE L'INVENTION.

Dans ces circonstances, la présente invention vise l'obtention de compositions bitume/polymère réticulées de manière thermoréversible.

Un autre objectif de l'invention est de proposer des compositions bitume/polymère présentant aux températures d'usage les propriétés des compositions bitume/polymère réticulées de manière irréversible au niveau notamment de l'élasticité et/ou de la cohésion, et présentant aux températures de mise en oeuvre, une viscosité réduite.

Un autre objectif de l'invention est de proposer un procédé simple de préparation de compositions bitume/polymère réticulées de manière thermoréversible.

### BREVE DESCRIPTION.

La société demanderesse a mis au point de nouvelles compositions bitume/polymère à réticulation thermoréversible. Les compositions bitume/polymère obtenues présentent aux températures d'usage les propriétés des compositions bitume/polymère à réticulation classique, et aux températures de mise en oeuvre, les propriétés des compositions bitume/polymère non réticulées.

L'invention vise tout d'abord une composition bitume/polymère comprenant au moins un bitume et au moins un polymère greffé **PG** comprenant une chaîne principale polymérique **P** résultant de la copolymérisation de motifs butadiène et de motifs styrène et au moins un greffon latéral **G** relié à la chaîne principale polymérique, le greffon comprenant une chaîne hydrocarbonée saturée, linéaire ou ramifiée, d'au moins 18 atomes de carbone, ledit polymère PG est obtenu par réaction entre au moins une double liaison du polymère **P** et une fonction thiol du greffon **G**..

De préférence, la chaîne hydrocarbonée saturée, linéaire ou ramifiée, d'au moins 18 atomes de carbone du greffon a pour formule générale CₙH₂ₙ₊ᵢ₁, où n représente un entier supérieur ou égal à 18, de préférence variant de 18 à 110.

La présente demande décrit que le polymère greffé **PG** résulte de la réaction entre au moins une fonction réactive d'un polymère **P** et une fonction réactive d'un greffon **G**, les fonctions réactives du polymère **P** et du greffon **G** étant choisies parmi les doubles liaisons, les époxydes, les anhydrides d'acides, les acides carboxyliques, les esters, les amides, les thiols, les alcools et les amines.

La présente demande décrit que le polymère **P** résulte de la polymérisation de motifs comprenant des fonctions réactives choisies parmi les doubles liaisons, les époxydes, les anhydrides d'acides, les acides carboxyliques, les esters, les amides, les thiols, les alcools et les amines, en particulier les doubles liaisons.

Le polymère **P** résulte notamment de la copolymérisation de motifs butadiène et de motifs styrène.

La demande décrit des motifs diène conjugué choisis parmi ceux comportant de 4 à 8 atomes de carbone par monomère, par exemple le butadiène, le 2-méthyl-1,3-butadiène (isoprène), le 2,3-diméthyl-1,3-butadiène, le 1,3-pentadiène et le 1,3-hexadiène, chloroprène, et leurs mélanges, en particulier le butadiène.

La demande décrit des motifs hydrocarbure monovinyl aromatique choisis parmi le styrène, l'o-méthyl styrène, le p-méthyl styrène, le p-tert-butylstyrène, le 2,3 diméthyl-styrène, l'α-méthyl styrène, le vinyl naphtalène, le vinyl toluène, le vinyl xylène, et analogues ou leurs mélanges, en particulier le styrène.

De préférence, la chaîne principale polymérique du polymère **P** comprend des doubles liaisons, en particulier des doubles liaisons vinyliques pendantes issues de l'addition 1-2 de motifs diène conjugués, en particulier de motifs butadiène.

De préférence, le polymère **P** a une teneur pondérale en styrène de 5% à 50%.

De préférence, le polymère **P** a une teneur pondérale en butadiène de 50% à 95%.

De préférence, le polymère **P** a une teneur pondérale en motifs à doubles liaisons vinyliques pendantes issues de l'addition 1-2 du butadiène de 5% à 50%.

Selon un mode de réalisation, le greffon **G** a pour formule générale CₙH₂ₙ₊₁-XH où X représente un atome de soufre et n représente un entier variant de 18 à 110.

Selon un autre mode de réalisation, le greffon **G** a pour formule générale CₙH₂ₙ₊₁-(OCH₂CH₂)ₘ-XH où X représente un atome de soufreet n représente un entier variant de 18 à 110 et m représente un entier variant de 1 à 20.

De préférence, le polymère greffé **PG** est obtenu par réaction entre au moins une double liaison vinylique pendante issue de l'addition 1-2 d'un motif diène conjugué du polymère **P** et une fonction réactive d'un greffon **G** choisie parmi les fonctions thiol.

De préférence, le polymère greffé **PG** est obtenu par réaction entre au moins une double liaison du polymère **P**, en particulier une double liaison vinylique pendante issue de l'addition 1-2 d'un motif butadiène du polymère **P** et une fonction thiol, de préférence terminale, d'un greffon **G**.

De préférence, le polymère greffé **PG** est obtenu par réaction entre au moins une double liaison du polymère **P**, en particulier une double liaison vinylique pendante issue de l'addition 1-2 d'un motif butadiène du polymère **P** et un greffon **G** de formule générale CₙH₂ₙ₊₁-XH où X représente un atome de soufre et n représente un entier variant de 18 à 110.

De préférence, le polymère greffé **PG** comprend au moins deux greffons par chaîne polymérique principale.

De préférence, la teneur en polymère greffé **PG** en poids par rapport au bitume est de 0,1 à 30%, préférentiellement de 1 à 10%.

La composition bitume/polymère comprenant en outre au moins un fluxant.

Le bitume est choisi parmi les résidus de distillation atmosphérique, les résidus de distillation sous vide, les résidus viscoréduits, les résidus soufflés, les résidus de désasphaltage, leurs mélanges et leurs combinaisons.

L'invention concerne en outre un procédé de préparation de compositions bitume/polymère réticulées de manière thermoréversible. Deux procédés de préparation sont envisagés. Dans le procédé dit *« ex-situ* », on introduit le polymère greffé **PG** dans le bitume. Dans le procédé dit « *in-situ* », on introduit le polymère **P** et le greffon **G** dans le bitume, la réaction de greffage se faisant dans le bitume.

De préférence, le procédé de préparation *ex situ* est tel que :
a) on introduit un bitume dans un récipient équipé de moyens de mélange, et on porte le bitume à une température comprise entre 90 et 220°C, de préférence entre 140 et 180°C,
b) on introduit de 0,1 à 30 %, de préférence de 0,1 à 10% en masse de polymère greffé **PG** par rapport à la masse de bitume,
c) on chauffe la composition à une température comprise entre 90 et 220°C, de préférence entre 140 et 180°C, sous agitation, jusqu'à l'obtention d'une composition bitume/polymère finale homogène.

De préférence, le procédé de préparation *in situ* est tel que :
a) on introduit un bitume dans un récipient équipé de moyens de mélange, et on porte le bitume à une température entre 90 et 220°C, de préférence entre 140 et 180°C,
b) on introduit de 0,1 à 30 %, de préférence de 0,1 à 10% en masse d'un polymère **P** et de 0,1 à 30 %, de préférence de 0,1 à 10% en masse d'un greffon **G** par rapport à la masse de bitume,
c) on chauffe la composition à une température comprise entre 90 et 220°C, de préférence entre 140 et 180°C, sous agitation, jusqu'à l'obtention d'une composition bitume/polymère finale homogène.

L'invention concerne enfin, l'utilisation des compositions bitume/polymère selon l'invention pour fabriquer un liant bitumineux, pouvant être mis en oeuvre tel quel, sous forme anhydre, sous forme d'émulsion ou sous forme de bitume fluxé. Ces liants bitumineux peuvent ensuite être associés en mélange avec des granulats pour fabriquer un enduit superficiel, un enrobé à chaud, un enrobé à froid, un enrobé coulé à froid, une grave émulsion. Les applications des compositions bitume/polymère selon l'invention peuvent être utilisées dans des applications routières et/ou industrielles pour fabriquer une couche de roulement, un revêtement d'étanchéité, une membrane ou une couche d'imprégnation.

### DESCRIPTION DETAILLEE.

Les compositions bitume/polymère comprennent un polymère greffé **PG**. Par polymère greffé, on entend un polymère qui comprend une chaîne principale polymérique et des greffons latéraux reliés à cette chaîne. Les greffons sont reliés directement à la chaîne principale du polymère. La chaîne principale polymérique est obtenue par polymérisation de plusieurs monomères. Les greffons sont ensuite greffés à la chaîne principale polymérique, après polymérisation de celle-ci, par réaction chimique. Il en résulte une liaison covalente entre les greffons et la chaîne principale du polymère. Les polymères greffés selon l'invention sont donc obtenus par polymérisation puis greffage des greffons et non pas par polymérisation de monomères comprenant déjà des greffons.

Le polymère greffé **PG** selon l'invention résulte de la réaction entre au moins une fonction réactive d'un polymère **P** et une fonction réactive d'un greffon **G**.

Les fonctions réactives qui se trouvent sur le polymère **P** et/ou sur le greffon **G** sont choisies parmi les doubles liaisons, les époxydes, les anhydrides d'acides, les acides carboxyliques, les esters, les amides, les thiols, les alcools et les amines.

En particulier, les fonctions réactives qui se trouvent sur le polymère sont choisies parmi les doubles liaisons. De préférence, les fonctions réactives qui se trouvent sur le greffon **G** sont choisies parmi, les époxydes, les anhydrides d'acides, les acides carboxyliques, les esters, les amides, les thiols, les alcools et les amines, de préférence, les thiols, les alcools et les amines, de préférence les thiols.

Le ou les fonctions réactives présentes sur le polymère **P** se situent le long de la chaîne du polymère **P** alors que le ou les fonctions réactives du greffon **G** sont de préférence terminales c'est-à-dire situées aux extrémités de la molécule. De préférence le greffon **G** n'a qu'une fonction réactive terminale alors que le polymère **P** possède plusieurs fonctions réactives. Les greffons sont reliés directement à la chaîne principale du polymère par réaction entre leurs fonctions réactives, via une liaison covalente.

Les polymères selon l'invention résultent de la polymérisation (homopolymérisation, copolymérisation, terpolymérisation...) de motifs (ou monomères) comprenant des fonctions réactives choisies parmi les doubles liaisons, les époxydes, les anhydrides d'acides, les acides carboxyliques, les esters, les amides, les thiols, les alcools et les amines, en particulier des doubles liaisons.

Parmi les polymères utilisables selon l'invention, on peut citer par exemple les polybutadiènes, les polyisoprènes, les caoutchoucs butyle, les polyacrylates, les polymétacrylates, les polychloroprènes, les polynorbornènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment terpolymère éthylène/acrylate de méthyle/méthacrylate de glycidyle et terpolymères éthylène /acrylate ou méthacrylate d'alkyle/anhydride maléique et notamment terpolymère éthylène/acrylate de butyle/anhydride maléique.

Les polymères **P** peuvent également être les polymères décrits dans les brevets EP1572807, EP0837909 et EP1576058 de la société demanderesse.

La présente demande décrit que les polymères **P** préférés sont les polymères qui résultent notamment de la polymérisation de motifs diène, de préférence diène conjugué. Ces polymères sont donc obtenus à partir d'au moins un motif (ou monomère) diène, de préférence diène conjugué. La présente demande décrit que les polymères peuvent résulter de l'homopolymérisation uniquement de motifs diène, de préférence diène conjugué. Dans ces polymères, le long de la chaîne polymérique, nous pourrons trouver plusieurs doubles liaisons résultant de l'homopolymérisation des motifs diène, de préférence diène conjugué. De tels polymères sont par exemple les polybutadiènes, les polyisoprènes, les polyisobutènes, les polychloroprènes, mais aussi les caoutchoucs butyle qui sont obtenus par concaténation de copolymères d'isobutène et d'isoprène. On pourra aussi trouver de copolymère ou terpolymères obtenus à partir de motifs diène tels que les motifs butadiène, isoprène, isobutène, 2,3-diméthyl-1,3-butadiène, 1,3-pentadiène, 1,3-hexadiène, chloroprène.

La présente demande décrit que les polymères pourront aussi résulter de la copolymérisation ou terpolymérisation de motifs diène, de préférence diène conjugué et d'autres motifs contenant d'autres fonctions réactives. Ces fonctions réactives seront choisies par exemple parmi les doubles liaisons, les époxydes, les anhydrides d'acides, les acides carboxyliques, les esters, les amides, les thiols, les alcools et les amines, en particulier les doubles liaisons.

Ainsi les polymères pourront être obtenus à partir de motifs diène, de préférence diène conjugué et de motifs tels que les motifs d'acétate de vinyle, d'acrylate de méthyle, d'acrylate de butyle, d'anhydride maléique, de métacrylate de glycidyle, d'acrylate de glycidyle, de norbornène. Les polymères pourront aussi être obtenus à partir de motifs diène, de préférence diène conjugué et de motifs comprenant des doubles liaisons.

Des polymères tels que les terpolymères éthylène/propène/diène (EPDM), les terpolymères acrylonitrile/butadiène/styrène (ABS) peuvent être utilisés.

La présente demande décrit que les polymères obtenus à partir d'au moins un motif (ou monomère) diène, de préférence diène conjugué, pourront également après la polymérisation être hydrogénés ou partiellement hydrogénés.

La présente demande décrit que les polymères **P** préférés sont les polymères qui possèdent le long de leur chaîne principale des doubles liaisons. On peut citer par exemple les homopolymères tels que les polybutadiènes ou les polyisoprènes. Des polymères préférés sont aussi les polymères résultant exclusivement de la copolymérisation de motifs diène conjugué et de motifs hydrocarbure monovinyl aromatique.

Parmi les motifs diène conjugué, on peut citer par exemple, ceux comportant de 4 à 8 atomes de carbone par monomère, comme le butadiène, le 2-méthyl-1,3-butadiène (isoprène), le 2,3-diméthyl-1,3-butadiène, le 1,3-pentadiène et le 1,2-hexadiène, chloroprène. Les motifs diène conjugué, préférés sont les motifs butadiène.

Parmi les motifs hydrocarbure monovinyl aromatique, on peut citer par exemple, le styrène, l'o-méthyl styrène, le p-méthyl styrène, le p-tert-butylstyrène, le 2,3 diméthyl-styrène, l'alpha-méthyl styrène, le vinyl naphtalène, le vinyl toluène, le vinyl xylène. Les motifs hydrocarbure monovinyl aromatique préférés sont les motifs styrène.

Les polymères préférés sont les polymères résultant de la copolymérisation de motifs butadiène et de motifs styrène.

Les fonctions réactives présentes sur le polymère **P** après la réaction de polymérisation sont de préférence des doubles liaisons. Selon le type de polymérisation des motifs diène conjugué via une addition 1-2 ou via une addition 1-4, les doubles liaisons réactives du polymère **P** sont de deux types.

Les premières résultent de l'addition 1-4 des diènes conjugués et les deuxièmes de l'addition 1-2 des diènes conjugués.

Les doubles liaisons issues de l'addition 1-2 des diènes conjugués sont des doubles liaisons vinyliques pendantes. Les fonctions réactives présentes sur le polymère **P** après la réaction de polymérisation sont de préférence des doubles liaisons vinyliques pendantes issues de l'addition 1-2 des motifs diène conjugué.

En particulier, les fonctions réactives présentes sur le polymère **P** après la réaction de polymérisation sont des doubles liaisons vinyliques pendantes issues de l'addition 1-2 des motifs butadiène.

Les polymères **P** préférés sont des copolymères bloc à base de styrène et de butadiène. Ils possèdent avantageusement une teneur pondérale en styrène allant de 5% à 50% et une teneur pondérale en butadiène allant de 50% à 95%. Le polymère **P** possède avantageusement une teneur pondérale en motifs à doubles liaisons vinyliques pendantes issues de l'addition 1-2 du butadiène allant de 5% à 50%. La masse moléculaire moyenne en poids du polymère **P** peut être comprise, par exemple, entre 10 000 et 600 000 daltons et se situe de préférence entre 30 000 et 400 000 daltons.

Le greffon **G** comprend une chaîne hydrocarbonée saturée, linéaire ou ramifiée, d'au moins 18 atomes de carbone, de préférence d'au moins 22 atomes de carbone, de préférence d'au moins 30 atomes de carbone. De préférence la chaîne hydrocarbonée saturée du greffon est linéaire. La chaîne hydrocarbonée saturée du greffon a pour formule générale CₙH₂ₙ₊₁, où n représente un entier supérieur ou égal à 18, de préférence variant de 18 à 110, de préférence variant de 18 à 90, de préférence variant de 18 à 50, de préférence variant de 20 à 40, de préférence de 25 à 30. La présente demande décrit que le greffon **G** a pour formule générale CₙH₂ₙ₊₁-XH où X représente un atome de soufre, un atome de d'oxygène ou un groupement NH et n représente un entier variant de 18 à 110, de préférence variant de 18 à 90, de préférence variant de 18 à 50, de préférence variant de 20 à 40, de préférence de 25 à 30.

Lorsque X est un atome de soufre, le greffon **G** a pour formule générale CₙH₂ₙ₊₁-SH, et n varie de 18 à 110, de préférence de 18 à 90, de préférence de 18 à 50, de préférence de 20 à 40, de préférence de 25 à 30.

La présente demande décrit que lorsque X est un atome d'oxygène, le greffon **G** a pour formule générale CₙH₂ₙ₊₁-OH,et n varie de 18 à 110, de préférence de 18 à 90, de préférence de 18 à 50, de préférence de 20 à 40, de préférence de 25 à 30.

La présente demande décrit que lorsque X représente le groupe NH, le greffon **G** a pour formule générale CₙH₂ₙ₊₁-NH₂, et n varie de 18 à 110, de préférence de 18 à 90, de préférence de 18 à 50, de préférence de 20 à 40, de préférence de 25 à 30.

De préférence, le greffon **G** de formule générale CₙH₂ₙ₊₁-XH est choisi parmi les thiols suivants : C₁₈H₃₇-SH, C₄₀H₈₁-SH, C₇₀H₁₄₁-SH et/ou C₉₀H₁₈₁-SH.

La présente demande décrit que le greffon **G** peut aussi avoir pour formule générale, la formule générale suivante : CₙH₂ₙ₊₁-(OCH₂CH₂)ₘ-XH où X représente un atome de soufre, un atome de d'oxygène ou un groupement NH, n représente un entier variant de 18 à 110 et m représente un entier variant de 1 à 20, de préférence n représente un entier variant de 18 à 90, de préférence variant de 18 à 50, de préférence variant de 20 à 40, de préférence de 25 à 30.

La présente demande décrit que le greffon **G** de formule générale CₙH₂ₙ₊₁-(OCH₂CH₂)ₘ-XH est choisi parmi les alcools suivants :
- CH₃-(CH₂)₃₂-(OCH₂CH₂)₃-OH,
- CH₃-(CH₂)₄₉-(OCH₂CH₂)₄-OH,
- CH₃-(CH₂)₃₂-(OCH₂CH₂)₁₁-OH,
- CH₃-(CH₂)₄₉-(OCH₂CH₂)₁₆-OH.

La présente demande décrit que le polymère greffé **PG** est obtenu par réaction entre au moins une double liaison du polymère **P,** en particulier une double liaison vinylique pendante issue de l'addition 1-2 d'un diène conjugué du polymère **P** et une fonction choisie parmi les fonctions thiols, alcools ou amines du greffon **G**.

En particulier, la présente demande décrit que le polymère greffé **PG** est obtenu par réaction entre au moins une double liaison vinylique pendante issue de l'addition 1-2 d'un motif diène conjugué du polymère **P**, et une fonction thiol, de préférence terminale d'un greffon **G**.

En particulier, le polymère greffé **PG** est obtenu par réaction entre au moins une double liaison vinylique pendante issue de l'addition 1-2 d'un motif butadiène du polymère **P**, et une fonction thiol, de préférence terminale d'un greffon **G**.

La présente demande décrit que le polymère greffé **PG** est obtenu par réaction entre au moins une double liaison vinylique pendante issue de l'addition 1-2 d'un motif butadiène du polymère **P**, et un greffon **G** de formule générale CₙH₂ₙ₊₁-XH où X représente un atome de soufre, un atome de d'oxygène ou un groupement NH et n représente un entier variant de 18 à 110, de préférence variant de 18 à 90, de préférence variant de 18 à 50, de préférence variant de 20 à 40, de préférence de 25 à 30.

Plus préférentiellement, le polymère greffé **PG** est obtenu par réaction entre au moins une double liaison vinylique pendante issue de l'addition 1-2 d'un motif butadiène du polymère **P**, et un greffon **G** choisi parmi les thiols suivants : C₁₈H₃₇-SH, C₄₀H₈₁-SH, C₇₀H₁₄₁-SH et/ou C₉₀H₁₈₁-SH.

La présente demande décrit que le polymère greffé **PG** est obtenu par réaction entre au moins une double liaison du polymère **P**, en particulier une double liaison vinylique pendante issue de l'addition 1-2 d'un diène conjugué du polymère **P** et une fonction alcool, de préférence terminale d'un greffon **G**.

La présente demande décrit que le polymère greffé **PG** est obtenu par réaction entre au moins une double liaison vinylique pendante issue de l'addition 1-2 d'un motif butadiène du polymère **P**, et un greffon **G** de formule générale CₙH₂ₙ₊₁-(OCH₂CH₂)ₘ-OH où n représente un entier variant de 18 à 110 et m représente un entier variant de 1 à 20, de préférence n représente un entier variant de 18 à 90, de préférence variant de 18 à 50, de préférence variant de 20 à 40, de préférence de 25 à 30.

La présente demande décrit que le polymère greffé **PG** est obtenu par réaction entre au moins une double liaison vinylique pendante issue de l'addition 1-2 d'un motif butadiène du polymère **P**, et un greffon **G** choisi parmi les alcools suivants :
- CH₃-(CH₂)₃₂-(OCH₂CH₂)₃-OH,
- CH₃-(CH₂)₄₉-(OCH₂CH₂)₄-OH,
- CH₃-(CH₂)₃₂-(OCH₂CH₂)₁₁-OH,
- CH₃-(CH₂)₄₉-(OCH₂CH₂)₁₆-OH,

On ne sortira pas du cadre de l'invention, lorsque le polymère **P** réagira dans un premier temps avec une espèce réactive comprenant une fonction choisie parmi les fonctions alcènes, diènes, époxydes, anhydrides d'acides, acides carboxyliques, esters, acides carboxyliques, thiol, alcool et/ou amine primaire et seulement ultérieurement avec un greffon **G** tel que défini dans l'invention.

D'après l'invention, le polymère **PG** comprend au moins un greffon latéral. De préférence le nombre moyen de greffons par chaîne polymérique principale est supérieur à 2.

De préférence, le polymère **PG** comprend de 3 à 55% en moles de greffons **G**, de préférence de 5 à 35% en moles, plus préférentiellement de 10 à 20% en moles. De préférence, le polymère **PG** comprend de 10 à 55% en masse de greffons **G**, de préférence de 15 à 35% en masse, plus préférentiellement de 10 à 20% en masse.

Lorsque le polymère **PG** est un polymère ayant une forte teneur pondérale en motifs à doubles liaisons vinyliques pendantes issues de l'addition 1-2 du butadiène (par exemple de l'ordre de 30% en masse, au lieu de 10% en masse pour un polymère **PG** est un polymère ayant une forte teneur pondérale en motifs à doubles liaisons vinyliques pendantes issues de l'addition 1-2 du butadiène), le taux de greffage est plus important et le polymère **PG** comprend plus de greffons **G.**

Ces greffons peuvent tous avoir la même structure chimique ou avoir des structures chimiques différentes au sein du polymère greffé **PG.** Il peut donc coexister au sein d'une même chaîne polymérique principale, des greffons de longueur de chaîne différente. Ainsi par exemple, le polymère greffé **PG** peut comprendre au moins un greffon comprenant une chaîne latérale en C₁₈H₃₇- et au moins un greffon comprenant une chaîne latérale en C₇₀H₁₄₁-.

Sans être lié par la théorie qui va suivre, ce sont les greffons **G** qui permettent une réticulation thermoréversible. La réticulation résulte de l'assemblage des polymères greffés **PG** via les greffons **G** (plus précisément via les chaînes hydrocarbonées des greffons **G**). Cet assemblage permet de définir des zones cristallines entre les greffons **G** du polymère greffé **PG.** Ces zones cristallines sont stables à basse température. Lorsque la température augmente, ces zones cristallines fondent, elles recristallisent lorsque la température diminue. A basse température les interactions des zones cristallines des greffons **G** rapprochent les chaînes du polymère greffé **PG** qui sont alors réticulées. Quand les zones cristallines des greffons fondent, les chaînes du polymère greffé **PG** s'éloignent, elles ne sont plus réticulées.

Ainsi, lorsqu'on additive un bitume avec les polymères greffés **PG** selon l'invention, on obtient des compositions bitume/polymère qui sont réticulées de manière réversible et plus particulièrement de manière thermoréversible.

Par réticulation thermoréversible des compositions bitume/polymère selon l'invention, on entend une réticulation qui se traduit par les phénomènes suivants :
- à basse température, par exemple aux températures de service, les greffons **G** des copolymères greffés **PG** sont associés entre eux et forment des points de réticulation. Le réseau polymérique formé confère à la composition bitume/polymère de bonnes propriétés mécaniques notamment au niveau de l'élasticité et de la cohésion.
- à chaud, une augmentation de température provoque la rupture des points de réticulation et par conséquent la dissociation des chaînes polymériques. Le réseau polymérique disparaît et la composition bitume/polymère retrouve une viscosité faible et donc une bonne fluidité.
- une diminution de température, permet aux points de réticulation de se reformer. Le phénomène est thermoréversible.

Les compositions bitume/polymère selon l'invention sont constituées d'au moins un bitume et d'au moins un polymère greffé **PG**.

Les polymères greffés **PG** introduits dans le bitume ont été précédemment décrits.

Les polymères greffés **PG** représentent de 0,1 à 30% en poids par rapport au bitume. Selon une mise en oeuvre préférée, les polymères greffés **PG** représentent de 1 à 10% en poids par rapport au bitume, de préférence, de 1 à 5% en poids par rapport au bitume.

Les compositions bitume/polymère selon l'invention peuvent contenir des bitumes issus de différentes origines. On peut citer tout d'abord les bitumes d'origine naturelle, ceux contenus dans des gisements de bitume naturel, d'asphalte naturel ou les sables bitumineux.

Les bitumes selon l'invention sont aussi les bitumes provenant du raffinage du pétrole brut. Les bitumes proviennent de la distillation atmosphérique et/ou sous vide du pétrole. Ces bitumes pouvant être éventuellement soufflés, viscoréduits et/ou désasphaltés. Les bitumes peuvent être des bitumes de grade dur ou de grade mou. Les différents bitumes obtenus par les procédés de raffinage peuvent être combinés entre eux pour obtenir le meilleur compromis technique.

Les bitumes utilisés peuvent également être des bitumes fluxés par addition de solvants volatils, de fluxants d'origine pétrolière, de fluxants carbochimiques et/ou de fluxants d'origine végétale. Les fluxants utilisés peuvent comprendre des acides gras en C₆ à C₂₄ sous **forme** acide, ester ou amide en combinaison avec une coupe hydrocarbonée.

L'invention vise également un procédé de préparation de compositions bitume/polymère réticulées de manière thermoréversible. Deux procédés peuvent être envisagés : un procédé dit *ex-situ* et un procédé dit *in-situ.*

Par procédé *ex-situ,* on entend un procédé dans lequel le greffage des greffons **G** sur le polymère **P** se fait en dehors du bitume, le polymère **PG** est obtenu en dehors du bitume.

L'obtention d'un bitume modifié selon le procédé dit *ex-situ* comprend les étapes essentielles suivantes :
a) on introduit un bitume dans un récipient équipé de moyens de mélange, et on porte le bitume à une température entre 90 et 220°C, de préférence entre 140°C et 180°C,
b) on introduit de 0,1 à 30 % en masse de polymère greffé **PG** selon l'invention par rapport à la masse de bitume, de préférence de 0,1 à 10%.
c) Tout au long du procédé, on chauffe la composition à une température entre 90 et 220°C, préférence entre 140 et 180°C, sous agitation, jusqu'à l'obtention d'une composition bitume/polymère finale homogène.

On peut aussi envisager l'obtention d'un bitume modifié selon un procédé dit *in-situ* où la formation du copolymère greffé **PG** selon l'invention se fait dans le bitume. Le procédé dit *in-situ* comprend les étapes essentielles suivantes :
a) on introduit un bitume dans un récipient équipé de moyens de mélange, et on porte le bitume à une température entre 90 et 220°C, de préférence entre 140°C et 180°C,
b) on introduit de 0,1 à 30 %, de préférence de 0,1 à 10 % en masse d'un polymère **P**, puis on introduit de 0,1 à 30 %, de préférence de 0,1 à 10 % en masse d'un greffon **G.**

Tout au long du procédé, on chauffe la composition à une température entre 90 et 220°C, de préférence entre 140 et 180°C, sous agitation, jusqu'à l'obtention d'une composition bitume/polymère finale homogène.

Diverses utilisations des compositions bitume/polymère obtenues selon l'invention sont envisagées, notamment pour la préparation d'un liant bitumineux, lequel peut à son tour être employé pour préparer une association avec des granulats, notamment routiers. Un autre aspect de l'invention est l'utilisation d'une composition bitumineuse dans diverses applications industrielles, notamment pour préparer un revêtement d'étanchéité, une membrane ou une couche d'imprégnation.

S'agissant des applications routières, l'invention vise notamment des enrobés bitumineux comme matériaux pour la construction et l'entretien des corps de chaussée et de leur revêtement, ainsi que pour la réalisation de tous travaux de voiries. Ainsi, l'invention concerne par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-orniérantes, les enrobés drainants, ou les asphaltes coulés (mélange entre un liant bitumineux et des granulats du type du sable).

S'agissant des applications industrielles des compositions bitumineuses, on peut citer la fabrication de membranes d'étanchéité, de membranes anti-bruit, de membranes d'isolation, des revêtements de surface, des dalles de moquette, des couches d'imprégnation, etc.

### EXEMPLES

### - Préparation du polymère PG

Trois polymères **PG** selon l'invention sont préparés à partir d'un polymère **P** qui est un copolymère séquencé styrène/butadiène, à 25% en poids de styrène et à 75% en poids de butadiène. Ce copolymère a une masse moléculaire en poids, Mw de 128 000 Dalton, un indice de polymolécularité Mw/Mn de 1,11 et une teneur en motifs à doubles liaisons vinyliques pendantes issues de l'addition du butadiène 1-2 de 10% en masse par rapport à l'ensemble des motifs butadiène.

Dans un réacteur, maintenu sous atmosphère d'azote, on introduit 50 ml de toluène, 2 g de polymère **P** décrit ci-dessus. On introduit ensuite dans le réacteur 1,5 g de greffon **G** et 10 mg d'AIBN (azobisisobutyronitrile); le mélange est chauffé progressivement à environ 90°C sous agitation.

Trois greffons sont utilisés : C₁₈H₃₇-SH (**G₁**), C₄₀H₈₁-SH (**G₂**), C₇₀H₁₄₁-SH (**G₃**).

Après 3 à 4 heures, la solution est refroidie à température ambiante et le polymère greffé **PG** est précipité à l'aide de méthanol et d'acétone.

On obtient les polymères greffés **PG₁**, **PG₂** et **PG₃** obtenus respectivement à partir des greffons **G₁**, **G₂** et **G₃**.

### - Bitume

Le bitume est un bitume de pénétration 50 1/10mm dont les caractéristiques répondent à la norme NF EN 12591.

### - Compositions bitume/polymère selon l'invention C₁, C₂ et C₃

Trois compositions bitume/polymère selon l'invention sont préparées à partir des polymères greffés **PG₁**, **PG₂** et **PG₃** et du bitume décrits ci-dessus (procédé *ex-situ*).

On introduit dans un réacteur maintenu à 180°C et équipé d'un système d'agitation mécanique 35 g de bitume. Le bitume est chauffé à 185°C et agité pendant environ 60 minutes. On ajoute ensuite 1,8 g du polymère greffé **PG₁**, **PG₂** ou **PG₃** obtenu ci-dessus. Le mélange s'effectue pendant une durée de 4 heures sous agitation.

On obtient les compositions bitume/polymère **C₁**, **C₂** et **C₃**, obtenues respectivement à partir des polymères greffés **PG₁**, **PG₂** et **PG₃**.

### - Préparation du polymère PG in-situ et de compositions bitume/polymère selon l'invention C₄, C₅ et C₆

Trois autres compositions bitume/polymère selon l'invention sont préparées à partir du procédé de préparation *in-situ.*

On introduit 35 g de bitume décrit ci-dessus dans un réacteur chauffé et agité à 185°C. Le bitume est chauffé et agité pendant environ 60 minutes. Ensuite, on ajoute 1,8 g du polymère **P** (copolymère styrène-butadiène diséquencé, à 25% en poids de styrène et à 75% en poids de butadiène décrit ci-dessus) et 1,8 g de greffon **G.**

Trois greffons sont utilisés : C₁₈H₃₇-SH (**G₁**), C₄₀H₈₁-SH (**G₂**), C₇₀H₁₄₁-SH (**G₃**).

Les mélanges sont agités pendant environ 4 heures.

On obtient les compositions **C₄**, **C₅** et **C₆** qui sont obtenues respectivement à partir des greffons **G₁**, **G₂** et **G₃**.

### Composition bitume/polymère témoin T₁

On prépare également une composition bitume/polymère témoin réticulée de manière irréversible de la manière suivante :

On introduit dans un réacteur 35 g du bitume ci-dessus. Le bitume est chauffé à 185°C et agité pendant environ 60 minutes. On ajoute ensuite 1,8 g du copolymère styrène-butadiène diséquencé, à 25% en poids de styrène et à 75% en poids de butadiène décrit ci-dessus. Le mélange est agité et chauffé à 185°C pendant environ 4 heures. On ajoute ensuite 50 mg de soufre. Le mélange est agité et chauffé à 185°C pendant 1h30.

Le Tableau ci-après présente les caractéristiques physiques des compositions selon l'invention et de la composition témoin.

### Résultats

| | **C₁** | **C₂** | **C₃** | **T₁** |
|---|---|---|---|---|
| Pénétrabilité (0,1 mm) (1) | 52 | 37 | 32 | 43 |
| TBA (°C) (2) | 51,8 | 74,2 | 83,8 | 61,6 |
| Viscosité à 80°C | 35,0 | 38,2 | 58,10 | 59,00 |
| Viscosité à 100°C | 6,10 | 5,50 | 11,40 | 14,94 |
| Viscosité à 120°C | 1,60 | 1,10 | 2,82 | 4,27 |
| Viscosité à 140°C | 0,59 | 0,41 | 0,97 | 1,48 |
| Viscosité à 160°C | 0,26 | 0,18 | 0,42 | 0,63 |
| Viscosité à 180°C | 0,14 | 0,10 | 0,22 | 0,37 |
| Viscosité à 200°C | 0,08 | 0,05 | 0,12 | 0,18 |
| Elongation max. à 5°C (%) (3) | 701 | 520 | 150 | 697 |
| Contrainte (daN/cm²) (3) | 1,0 | 1,3 | 1,3 | 1,3 |

| | | | | |
|---|---|---|---|---|
| (1) Selon la norme EN 1426 (2) Température Bille et Anneau, selon la norme EN1427 (3) Test de traction à 5°C, selon la norme NF T 66-038, avec une vitesse d'étirement de 500 mm/min. | | | | |

Les résultats de ce tableau montrent que les viscosités de 80°C à 200°C des compositions bitume/polymère selon l'invention, sont toujours inférieures à celles de la composition témoin **T₁**. Les compositions bitume/polymère selon l'invention à partir de 80°C sont donc moins visqueuses qu'une composition bitume/polymère réticulé au soufre. De faibles viscosités aux températures de mise en oeuvre sont donc atteintes grâce aux compositions bitume/polymère selon l'invention.

De plus, on constate que les propriétés élastiques des compositions bitume/polymère selon l'invention sont dépendantes de la longueur de la chaîne du greffon greffé sur le polymère. Le meilleur compromis élasticité/viscosité est obtenu pour les compositions **C₁** et **C₂** dans lesquelles les propriétés élastiques sont du même ordre de grandeur de celles d'une composition bitume/polymère réticulée au soufre (élongation maximale en traction et contrainte équivalentes pour **C₁**, **C₂** et **T₁**). Aux températures d'usage, les compositions bitume/polymère selon l'invention, en particulier **C₁** et **C₂** sont donc élastiques tout en présentant une viscosité réduite aux températures de mise en oeuvre.

De même, on constate que les températures Bille et Anneau des compositions bitume/polymère selon l'invention sont dépendantes de la longueur de la chaîne du greffon greffé sur le polymère. Dans le cas des compositions **C₂** et **C₃**, ces valeurs sont mêmes supérieures à celle du témoin **T₁** réticulé au soufre.

## Revendications

1. Composition bitume/polymère comprenant au moins un bitume et au moins un polymère greffé **PG** comprenant une chaîne principale polymérique **P** résultant de la copolymérisation de motifs butadiène et de motifs styrène et au moins un greffon latéral **G** relié à la chaîne principale polymérique, le greffon comprenant une chaîne hydrocarbonée saturée, linéaire ou ramifiée, d'au moins 18 atomes de carbone, ledit polymère **PG** est obtenu par réaction entre au moins une double liaison du polymère **P** et une fonction thiol du greffon **G**.

2. Composition bitume/polymère selon la revendication 1 dans laquelle la chaîne hydrocarbonée saturée, linéaire ou ramifiée, d'au moins 18 atomes de carbone du greffon a pour formule générale CₙH₂ₙ₊₁, où n représente un entier supérieur ou égal à 18, de préférence variant de 18 à 110.

3. Composition bitume/polymère selon la revendication 1 ou 2 dans laquelle la chaîne principale polymérique du polymère **P** comprend des doubles liaisons, en particulier des doubles liaisons vinyliques pendantes issues de l'addition 1-2 de motifs butadiène.

4. Composition bitume/polymère selon la revendication 1, 2 ou 3 dans laquelle le polymère **P** a une teneur pondérale en motifs à doubles liaisons vinyliques pendantes issues de l'addition 1-2 du butadiène de 5% à 50%.

5. Composition bitume/polymère selon l'une quelconque des revendications 1 à 4 dans laquelle le greffon **G** a pour formule générale CₙH₂ₙ₊₁-XH où X représente un atome de soufre, et n représente un entier variant de 18 à 110.

6. Composition bitume/polymère selon l'une quelconque des revendications 1 à 5 dans laquelle le greffon **G** a pour formule générale CₙH₂ₙ₊₁-(OCH₂CH₂)ₘ-XH où X représente un atome de soufre, , n représente un entier variant de 18 à 110 et m représente un entier variant de 1 à 20.

7. Composition bitume/polymère selon l'une quelconque des revendications 1 à 6 dans laquelle le polymère greffé **PG** est obtenu par réaction entre au moins une double liaison vinylique pendante issue de l'addition 1-2 d'un motif diène conjugué du polymère **P** et une fonction réactive d'un greffon **G** choisie parmi les fonctions thiol.

8. Composition bitume/polymère **PG** selon l'une quelconque des revendications 1 à 7 dans laquelle le polymère greffé **PG** comprend au moins deux greffons par chaîne polymérique principale.

9. Composition bitume/polymère selon l'une quelconque des revendications 1 à 8 dans laquelle la teneur en polymère greffé **PG** en poids par rapport au bitume est de 0,1 à 30%, préférentiellement de 1 à 10%.

10. Composition bitume/polymère selon l'une quelconque des revendications 1 à 9 comprenant en outre au moins un fluxant.

11. Procédé de préparation *ex situ* de compositions bitume/polymère selon les revendications 1 à 10 **caractérisé en ce que** :
a) on introduit un bitume dans un récipient équipé de moyens de mélange, et on porte le bitume à une température comprise entre 90 et 220°C, de préférence entre 140 et 180°C,
b) on introduit de 0,1 à 30 %, de préférence de 0,1 à 10% en masse de polymère greffé **PG** par rapport à la masse de bitume,
c) on chauffe la composition à une température comprise entre 90 et 220°C, de préférence entre 140 et 180°C, sous agitation, jusqu'à l'obtention d'une composition bitume/polymère finale homogène.

12. Procédé de préparation *in situ* de compositions bitume/polymère selon les revendications 1 à 10 **caractérisé en ce que** :
a) on introduit un bitume dans un récipient équipé de moyens de mélange, et on porte le bitume à une température entre 90 et 220°C, de préférence entre 140 et 180°C,
b) on introduit de 0,1 à 30 %, de préférence de 0,1 à 10% en masse d'un polymère **P** et de 0,1 à 30 %, de préférence de 0,1 à 10% en masse d'un greffon **G** par rapport à la masse de bitume,
c) on chauffe la composition à une température comprise entre 90 et 220°C, de préférence entre 140 et 180°C, sous agitation, jusqu'à l'obtention d'une composition bitume/polymère finale homogène.

13. Utilisation des compositions bitume/polymère selon l'une quelconque des revendications 1 à 10 pour fabriquer un liant bitumineux, notamment sous forme anhydre, sous forme d'émulsion ou sous forme de bitume fluxé.

14. Utilisation des compositions bitume/polymère selon l'une quelconque des revendications 1 à 10 en mélange avec des granulats pour fabriquer un enduit superficiel, un enrobé à chaud, un enrobé à froid, un enrobé coulé à froid ou une grave émulsion.

15. Utilisation des compositions bitume/polymère selon l'une quelconque des revendications 1 à 10 pour fabriquer une couche de roulement, un revêtement d'étanchéité, une membrane ou une couche d'imprégnation.

## Claims

1. A bitumen/polymer composition comprising at least one bitumen and at least one graft polymer GP comprising
a polymer main chain P resulting from the copolymerization of butadiene units and styrene units and
at least one side graft G linked to the polymer main chain, the graft comprising a branched or linear, saturated hydrocarbon chain, having at least 18 carbon atoms,
said graft polymer GP being obtained by reaction between at least one double bound of polymer P and a thiol function of the graft G.

2. The bitumen/polymer composition according to claim 1, in which the branched or linear, saturated hydrocarbon chain with at least 18 carbon atoms of the graft has the general formula CₙH₂ₙ₊₁, where n represents an integer greater than or equal to 18, preferably varying from 18 to 110.

3. The bitumen/polymer composition according to claim 1 or claim 2, in which the polymer main chain of the polymer P comprises double bonds, in particular pendant vinyl double bonds originating from the 1-2 addition of butadiene units.

4. The bitumen/polymer composition according to claim 1, 2 or 3, in which the polymer P has a content by weight of pendant vinyl double-bond units originating from the 1-2 addition of butadiene from 5% to 50%.

5. The bitumen/polymer composition according to any one of claims 1 to 4, in which the graft G has the general formula CₙH₂ₙ₊₁-XH where X represents a sulphur atom and n represents an integer varying from 18 to 110.

6. The bitumen/polymer composition according to any one of claims 1 to 5, in which the graft G has the general formula CₙH₂ₙ₊₁-(OCH₂CH₂)ₘ-XH where X represents a sulphur atom , n represents an integer varying from 18 to 110 and m represents an integer varying from 1 to 20.

7. The bitumen/polymer composition according to any one of claims 1 to 6, in which the graft polymer GP is obtained by reaction between at least a pendant vinyl double bond originating from the 1-2 addition of a conjugated diene unit of polymer P and a reactive function of a graft G chosen from the thiol functions.

8. The bitumen/polymer composition GP according to any one of claims 1 to 7, in which the graft polymer GP comprises at least two grafts per main polymer chain.

9. The bitumen/polymer composition according to any one of claims 1 to 8, in which the graft polymer GP content by weight with respect to the bitumen is from 0.1 to 30%, preferably 1 to 10%.

10. The bitumen/polymer composition according to any one of claims 1 to 9, also comprising at least one fluxing agent.

11. A process for the *ex situ* preparation of bitumen/polymer compositions according to any one of claims 1 to 10, the process comprising:
a) introducing a bitumen into a receiving vessel equipped with a mixer, and taking the bitumen to a temperature comprised between 90 and 220°C, preferably between 140 and 180°C,
b) introducing from 0.1 to 30 %, preferably 0.1 to 10% by mass of a graft polymer GP with respect to the mass of bitumen, and
c) heating the composition at a temperature comprised between 90 and 220°C, preferably between 140 and 180°C under stirring, until a homogeneous final bitumen/polymer composition is obtained.

12. Process for the *in situ* preparation of bitumen/polymer compositions according to any one of claims 1 to 10, the process comprising:
a) introducing a bitumen into a receiving vessel equipped with a mixer, and taking the bitumen to a temperature between 90 and 220°C, preferably between 140 and 180°C,
b) introducing from 0.1 to 30 %, preferably 0.1 to 10% by mass of a polymer P and from 0.1 to 30 %, preferably 0.1 to 10% by mass of a graft G with respect to the mass of bitumen, and
c) heating the composition at a temperature comprised between 90 and 220°C, preferably between 140 and 180°C under stirring, until a homogeneous final bitumen/polymer composition is obtained.

13. A use of bitumen/polymer compositions according to any one of the claim 1 to 10 in order to produce a bituminous binder, in particular in anhydrous form, in the form of an emulsion or in the form of fluxed bitumen.

14. Use of bitumen/polymer compositions according to any one of claims 1 to 10 in a mixture with aggregates for producing a surface dressing, a hot mix, a cold mix, a cold-cast mix, or an emulsion gravel.

15. Use of the bitumen/polymer compositions according to any one of claims 1 to 10 for producing a wearing course, a sealing membrane, a membrane or an impregnation layer.

## Patentansprüche

1. Bitumen/Polymer-Zusammensetzung, die mindestens ein Bitumen und mindestens ein Pfropfpolymer **PG** umfasst, wobei letzteres eine Polymerhauptkette **P**, welche aus der Copolymerisation von Butadienbausteinen und Styrolbausteinen hervorgeht, umfasst sowie mindestens ein seitliches Pfropfelement **G**, das mit der Polymerhauptkette verbunden ist, wobei das Pfropfelement eine geradkettige oder verzweigte gesättigte Kohlenwasserstoffkette mit mindestens 18 Kohlenstoffatomen umfasst, wobei das Polymer **PG** durch die Reaktion mindestens einer Doppelbindung des Polymers **P** und einer funktionellen Thiolgruppe des Pfropfelements **G** erhalten wird.

2. Bitumen/Polymer-Zusammensetzung nach Anspruch 1, wobei die geradkettige oder verzweigte gesättigte Kohlenwasserstoffkette mit mindestens 18 des Pfropfelements die allgemeine Formel CₙH₂ₙ₊₁ hat, wobei n eine ganze Zahl von mindestens 18 darstellt, die vorzugsweise Werte von 18 bis 110 annehmen kann.

3. Bitumen/Polymer-Zusammensetzung nach Anspruch 1 oder 2, wobei die Polymerhauptkette des Polymers **P** Doppelbindungen umfasst, insbesondere frei bewegliche Vinyldoppelbindungen, die aus der 1,2-Addition von Butadienbausteinen hervorgehen.

4. Bitumen/Polymer-Zusammensetzung nach Anspruch 1, 2 oder 3, wobei das Polymers **P** einen gewichtsmäßigen Gehalt von 5 % bis 50 % an Bausteinen mit frei beweglichen Vinyldoppelbindungen hat, die aus der 1,2-Addition von Butadien hervorgehen.

5. Bitumen/Polymer-Zusammensetzung nach einem beliebigen der Ansprüche 1 bis 4, wobei das Pfropfelement **G** die allgemeine Formel CₙH₂₊₁-XH hat, wobei X ein Schwefelatom darstellt und n eine ganze Zahl darstellt, die Werte von 18 bis 110 annehmen kann.

6. Bitumen/Polymer-Zusammensetzung nach einem beliebigen der Ansprüche 1 bis 5, wobei das Pfropfelement **G** die allgemeine Formel CₙH₂ₙ₊₁-(OCH₂CH₂)ₘ-XH hat, wobei X ein Schwefelatom darstellt, n eine ganze Zahl darstellt, die Werte von 18 bis 110 annehmen kann, und m eine ganze Zahl darstellt, die Werte von 1 bis 20 annehmen kann.

7. Bitumen/Polymer-Zusammensetzung nach einem beliebigen der Ansprüche 1 bis 6, wobei das Pfropfpolymer **PG** erhalten wird, indem mindestens eine frei bewegliche Vinyldoppelbindung, die aus der 1,2-Addition eines konjugierten Dien-Bausteins des Polymers **P** hervorgeht, mit einer reaktionsfähigen funktionellen Gruppe eines Pfropfelements **G**, welche aus den funktionellen Thiolgruppen ausgewählt ist, umgesetzt wird.

8. Bitumen/Polymer-Zusammensetzung **PG** nach einem beliebigen der Ansprüche 1 bis 7, wobei das Pfropfpolymer **PG** mindestens zwei Pfropfelemente pro Polymerhauptkette umfasst.

9. Bitumen/Polymer-Zusammensetzung nach einem beliebigen der Ansprüche 1 bis 8, wobei der gewichtsmäßige Gehalt an Pfropfpolymer **PG** unter Bezugnahme auf das Bitumen 0,1 bis 30 %, vorzugsweise 1 bis 10 %, beträgt.

10. Bitumen/Polymer-Zusammensetzung nach einem beliebigen der Ansprüche 1 bis 9, wobei sie darüber hinaus mindestens ein Fluxmittel umfasst.

11. Herstellungsverfahren *ex situ* für Bitumen/Polymer-Zusammensetzungen nach den Ansprüchen 1 bis 10, **dadurch gekennzeichnet, dass**:
a) ein Bitumen in einen Behälter gegeben wird, der mit Mischmitteln ausgestattet ist, und das Bitumen auf eine Temperatur im Bereich von 90 bis 220 °C, vorzugsweise von 140 bis 180 °C, gebracht wird,
b) 0,1 bis 30 %, vorzugsweise 0,1 bis 10 Massen-%, an Pfropfpolymer **PG** unter Bezugnahme auf die Bitumenmasse zugesetzt werden,
c) die Zusammensetzung, unter Rühren auf eine Temperatur im Bereich von 90 bis 220 °C, vorzugsweise von 140 bis 180 °C erhitzt wird, bis zum Erzielen einer homogenen fertigen Bitumen/Polymer-Zusammensetzung.

12. Herstellungsverfahren *in situ* für Bitumen/Polymer-Zusammensetzungen nach den Ansprüchen 1 bis 10, **dadurch gekennzeichnet, dass**:
a) ein Bitumen in einen Behälter gegeben wird, der mit Mischmitteln ausgestattet ist, und das Bitumen auf eine Temperatur im Bereich von 90 bis 220 °C, vorzugsweise von 140 bis 180 °C, gebracht wird,
b) 0,1 bis 30 %, vorzugsweise 0,1 bis 10 Massen-%, eines Polymers **P** und 0,1 bis 30 %, vorzugsweise 0,1 bis 10 Massen-%, eines Pfropfelements **G** unter Bezugnahme auf die Bitumenmasse zugesetzt werden,
c) die Zusammensetzung, unter Rühren auf eine Temperatur im Bereich von 90 bis 220 °C, vorzugsweise von 140 bis 180 °C erhitzt wird, bis zum Erzielen einer homogenen fertigen Bitumen/Polymer-Zusammensetzung.

13. Verwendung der Bitumen/Polymer-Zusammensetzungen nach einem beliebigen der Ansprüche 1 bis 10, um ein bituminöses Bindemittel, das insbesondere in wasserfreier Form, in Form einer Emulsion oder in Form von Fluxbitumen vorliegt, herzustellen.

14. Verwendung der Bitumen/Polymer-Zusammensetzungen nach einem beliebigen der Ansprüche 1 bis 10 in Mischung mit Gesteinskörnungen, um einen Oberflächenüberzug, einen Asphalt zum Heißeinbau, einen Asphalt zum Kalteinbau, einen Gussasphalt zum Kalteinbau oder einen emulsionsgebundenen Kiessand herzustellen.

15. Verwendung der Bitumen/Polymer-Zusammensetzungen nach einem beliebigen der Ansprüche 1 bis 10 in Mischung, um eine Straßendeckschicht, einen dicht abschließenden Belag, eine Membran oder eine Imprägnierschicht herzustellen.
